# EUROPÄISCHE PATENTSCHRIFT

(11) **EP 0 879 536 B1**
(45) Veröffentlichungstag und Bekanntmachung des Hinweises auf die Patenterteilung: **29.09.1999**
(21) Anmeldenummer: 96940655.2
(22) Anmeldetag: 28.11.1996
(51) Int. Cl.: H04N 7/173

(54) **VERFAHREN ZUM WIEDERGEBEN VON VISUELLEN INFORMATIONEN**
METHOD FOR REPRODUCING VISUAL INFORMATION
METHODE POUR LA REPRODUCTION D'INFORMATIONS VISUELLES

(30) Priorität: 08.12.1995 DE 19545882
(43) Veröffentlichungstag der Anmeldung: 25.11.1998
(73) Patentinhaber: Fridley Technologies Limited, Road Town, Tortola (VG)
(72) Erfinder: GOLDSCHEIDER, Daniel, A-1010 Wien (AT)
(74) Vertreter: Konle, Tilmar, Dipl.-Ing.
(86) Internationale Anmeldenummer: EP9605261
(87) Internationale Veröffentlichungsnummer: WO9722207

(56) Entgegenhaltungen:
- EP-A- 0 673 164
- WO-A-94/23537
- GB-A- 2 207 838
- US-A- 5 410 326
- COMMUNICATIONS OF THE ASSOCIATION FOR COMPUTING MACHINERY, Bd. 36, Nr. 12, Dezember 1993, NEW YORK US, Seiten 19-23, XP000414935 LARRY PRESS: "the internet and interactive television"

## Beschreibung

Die Erfindung bezieht sich auf ein Verfahren zum Wiedergeben von visuellen Informationen, die im "Internet" übertragen werden.

In digitalen Telekommunikationsnetzen werden unter sogenannten HTTP-Adressen Serverprogramme übertragenen, mit deren Hilfe visuelle Informationen von Datendiensten in Form von Schrift, Grafiken und/oder Bildern abrufbar sind. Die Wiedergabe der angewählten Serverprogramme und der damit abgerufenen visuellen Informationen erfolgt auf dem Bildschirm des Monitors eines PC-Arbeitsplatzes, d.h., in einem Umfeld, in dem die Akzeptanz von Werbeinhalten gering ist. Elektronische Werbung erfolgt daher überwiegend in Verbindung mit Fernsehunterhaltung.

WO-A-94 23 537 zeigt die Multimedia-Übertragung über ein öffentliches Telefonnetz.

Es ist ferner bekannt, in Fernseh-Werbesendungen Produkte vorzustellen und am Ende der Werbesendung getrennt für jedes Land die Preise und die Telefonnummern anzugeben, unter welchen die zuvor beworbenen Produkte bestellt werden können. Dieses sogenannte "Teleshopping" hat jedoch den Nachteil, daß vom Fernsehteilnehmer die betreffenden Telefonnummern mitgeschrieben werden müssen. Zudem leidet der unmittelbare Bezug zwischen der fernsehmäßigen Präsentation des Produktes und der Anzeige von Preis und Telefonnummer. Um den Bestellvorgang zeitgleich mit der Präsentation des Produktes durchzuführen und zu vereinfachen, ist es aus der DE 44 27 046 A1 bereits bekannt, Zusatzinformationen innerhalb des Fernsehprogrammsignals in zeitlicher Korrelation zu dessen Programminhalt zu übertragen. Auf einen ersten Befehl des Benutzers wird eine in der zuletzt empfangenen Zusatzinformation enthaltene Klarschrift und gegebenenfalls Grafikinformation für eine bestimmte Zeitdauer auf dem Fernsehbildschirm wiedergegeben. Während dieser Wiedergabe wird auf einen zweiten Befehl des Benutzers aus der zuletzt empfangenen Zusatzinformation eine Telefonnummer als Bestellinformation entnommen und über ein Modem eine Telefonverbindung zu einer automatischen Bestellannahme hergestellt.

Die Aufgabe der Erfindung besteht demgegenüber darin, Werbeinhalte in einem Telekommunikationssystem der eingangs erwähnten Art mit hoher Akzeptanz von Seiten der Systembenutzer zu plazieren.

Diese Aufgabe wird erfindungsgemäß durch die kennzeichnenden Merkmale des Patentanspruchs 1 gelöst.

Eine vorteilhafte Ausgestaltung des erfindungsgemäßen Verfahrens ergibt sich aus dem abhängigen Anspruch,

Die Erfindung geht von der Überlegung aus, die Akzeptanz von Werbeinhalten bei Benutzern von digitalen Telekommunikationsnetzen dadurch zu erhöhen, daß dem Benutzer beim Betrachten von Fernsehunterhaltung mit eingeblendeter Werbung signalisiert wird, daß er auf Knopfdruck die HTTP-Adresse eines Serverprogramms in einem digitalen Telekommunikationsnetz, z.B. Internet, anwählen kann. Wesentlich ist, daß die Inhalte des Serverprogramms auf dem Bildschirm des Fernsehempfängers wiedergegeben werden, so daß der Benutzer mit Hilfe des Serverprogramms nähere Informationen über die Werbeinhalte einer noch laufenden

Fernsehwerbung aus dem digitalen Telekommunikationsnetz abrufen und sofort auf auf dem Bildschirm des Fernsehempfängers wiedergeben kann. Für die technische Umsetzung ist es lediglich erforderlich, die HTTP-Adresse als Zusatzsignal in dem Fernsehsignal in zeitlicher Korrelierung zu den Werbeinhalten zu übertragen und diese Zusatzsignalübertragung dem Benutzer auf dem Bildschirm in beliebiger Form zu signalisieren, beispielsweise durch Einblenden einer bestimmten Markierung. Auf Befehl des Benutzers (Knopfdruck) wird die HTTP-Adresse aus dem Fernsehsignal ausgelesen und an ein mit dem Fernsehempfänger gekoppeltes Modem weitergeleitet, welches eine Kommunikationsverbindung zu dem digitalen Telekommunikationsnetz unter der ausgelesenen Adresse herstellt. Für die Wiedergabe der digitalen Informationssignale des Telekommunikationsnetzes auf dem Bildschirm des Fernsehgerätes ist neben einer Digital/Anlog-Wandlung der Signale im Falle eines analogen Fernsehempfängers bzw. einer Digital/Digital-Wandlung im Falle eines digitalen Fernsehempfängers in jedem Falle eine Synchronisation mit dem Takt des Fernsehsignals erforderlich.

## Patentansprüche

1. Verfahren zum Wiedergeben von visuellen Informationen in Form von Schrift, Grafiken und/oder Bildern, die im Internet übertragen werden, **dadurch gekennzeichnet,** daß innerhalb eines Fernsehprogrammsignals, welches mittels eines Fernsehempfängers wiedergebbar ist, als Zusatzsignal in zeitlicher Korrelation zu Werbeinhalten des Fernsehprogrammsignals eine Internet-Adresse für ein Serverprogramm des Internet übertragen und zusammen mit den Werbeinhalten als Markierung auf dem Bildschirm des Fernsehempfängers wiedergegeben wird, und daß die Internet-Adresse auf Befehl eines Betrachters der Werbeinhalte aus dem Fernsehprogrammsignal ausgelesen und an ein mit dem Fernsehempfänger gekoppeltes Modem weitergeleitet wird, welches eine Kommunikationsverbindung zum Internet unter der ausgelesenen Internet-Adresse herstellt, um die Inhalte des adressierten Serverprogramms auf dem Bildschirm des Fernsehempfängers wiederzugeben.

2. Verfahren nach Anspruch 1, **dadurch gekennzeichnet,** daß die aus dem digitalen Telekommunikationsnetz empfangenen Datensignale vor ihrer Wiedergabe auf dem Bildschirm des Fernsehempfängers auf den Takt des Fernsehprogrammsignals synchronisiert werden.

## Claims

1. A method for reproducing visual information in the form of writing, graphics and/or images, which are transmitted on the Internet, **characterized in that** an Internet address for a server program of the Internet is transmitted within a television program signal that can be reproduced by a television receiver as additional signal in a temporal correlation to the advertising content of the television program signal, and that it is reproduced together with the advertising content as marker on the television receiver screen, and that the Internet address is read out of the television program signal upon command from a viewer of the advertising content and is transmitted to a modem, connected to the television receiver, which modem establishes a communication link to the Internet under the read-out Internet address in order to reproduce the content of the addressed server program on the television receiver screen.

2. A method according to claim 1, **characterized in that** the data signals received from the digital telecommunication network are synchronized with the clock pulse of the television program signal prior to being reproduced on the television receiver screen.

## Revendications

1. Procédé pour la reproduction d'informations visuelles sous forme de caractères, de graphiques et/ou d'images qui sont transmises par Internet, caractérisé en ce qu'à l'intérieur d'un signal de programme de télévision, lequel est reproductible par un récepteur de télévision, on transmet, en tant que signal complémentaire en corrélation temporelle avec un contenu publicitaire d'un signal de programme de télévision, une adresse Internet pour un programme de serveur Internet, et ensemble avec le contenu publicitaire, on la reproduit, sous forme d'un marquage, sur l'écran du récepteur de télévision, et en ce que l'adresse Internet, sur ordre d'un spectateur du contenu publicitaire, est lue dans le signal de programme de télévision et est transmise grâce à un modem couplé au récepteur de télévision, lequel modem produit une connexion de communication à Internet sous l'adresse Internet lue, afin de reproduire, sur l'écran du récepteur de télévision, le contenu du programme du serveur adressé.

2. Procédé selon la revendication 1, caractérisé en ce que les signaux de données reçus du réseau de télécommunications numériques sont synchronisés, avant leur reproduction sur l'écran du récepteur de télévision, au rythme du signal de programme de télévision.
